# EUROPEAN PATENT SPECIFICATION

(11) **EP 2 613 512 B1**
(45) Date of publication and mention of the grant of the patent: **17.08.2016**
(21) Application number: 12195340.0
(22) Date of filing: 03.12.2012
(51) Int. Cl.: H04M 7/12, H04M 3/42, H04L 12/66

(54) **Configuring a Network Gateway Service**
Konfiguration eines Netzwerk-Gateway-Dienstes
Configurer un service de passerelle de réseau

(30) Priority: 01.12.2011 GB 201120725; 19.04.2012 GB 201206901
(43) Date of publication of application: 10.07.2013
(73) Proprietor: Vodafone IP Licensing Limited, Newbury, Berkshire RG14 2FN (GB)
(72) Inventor: Bartlett, Allan, Newbury, Berkshire RG14 2FN (GB); Irwin, James Anthony, Newbury, Berkshire RG14 2FN (GB)
(74) Representative: Boult Wade Tennant

(56) References cited:
- EP-A1- 2 086 260
- WO-A1-2008/051716
- DE-A1-102007 011 886
- US-A1- 2011 177 797

## Description

### Field of the Invention

The present invention relates to a method and system for routing telecommunications traffic and a method and a system and method for configuring such as service.

### Background of the Invention

The basic consumer mobile voice offering has not fundamentally changed over the past 15 years, nor has the way consumers use it. However, the widespread adoption of mature VoIP is now resulting in a myriad of "over the top" applications and features that deliver both voice and associated multimedia. Furthermore, fixed line circuit switched voice services and mobile operator services in the home remain partitioned and separate. At present calls within these separate systems are handled and routed independently; and there is no common access or control across the systems with the possible exception of configuring semi-permanent call transfers or forwards which do not provide the envisaged degree of flexibility or utility and may incur additional costs.

To offer a Converged Communications experience a presence in the fixed line business is needed but the barriers to entry are high as in many countries the fixed and broadband market is monopolised by market leaders/incumbents who offer unattractive wholesale/reseller propositions.

Existing products provide a telephone line service without requiring a fixed telephone line a using only an Internet connection (VoIP). However, users may be unwilling to remove a fixed line due to security and other concerns. Furthermore, these products can be difficult and complex to setup requiring web page registration, for example.

Therefore, there is required a method and system that overcomes these problems.

### Summary of the Invention

In order to overcome these issues the proposed solution leverages VoIP technologies and home gateway to enable an OTT play in the in the fixed world. The Fixed Mobile Convergence (FMC) product offers customers a flexible and convenient way to manage their converged (fixed and mobile) communication services and also configure a converged visual voicemail and other advanced services such as call blocking and other rich inbound calling services.

Against this background and in accordance with a first aspect there is provided a method of configuring a network gateway service connecting a telephone line on a public circuit-switched telephone network, PSTN, with a data network enabling telecommunications traffic to be routed from the PSTN over the data network to a mobile unit, the method being in accordance with claim 1.

Preferably, the method may further comprise the step of
verifying success of the configuration following receipt of the call at the application. Connection is not essential although may be used for further verification. Typically, the application will cause the call to be disconnected as soon as the correct caller id is detected. Verification may include detecting the received telephone number.

Providing the application with an identifier of the network gateway connected to the telephone line comprises obtaining by the application an image of a graphical representation of the identifier. The network gateway identifier should be unique. A record of each identifier may be kept on a registration or configuration server. This maybe a bar code, 2-D barcode, QR code or other data containing image. A camera on the mobile unit may capture the image by photographing the image, preferably attached or printed on the network gateway. Optionally, near field communication may be used. For example, a user may swipe their mobile phone over the network gateway and NFC is used to pass the correct configuration and data/IDs.

Preferably, the method may further comprise the step of registering an account associated with the network gateway with a server.

Optionally, the method may further comprise the step of testing the telephone line.

Preferably, the test may include a voltage line measurement when the telephone line is idle and/or busy. Other tests may be carried out.

Optionally, the result or results of the telephone line test is used to configure the network gateway.

According to a further aspect, there is provided a configuration server according to claim 10.

Optionally, initiating the call may further comprise sending a signal to the network gateway to call the configuration server over the PSTN. Optionally, a separate server/network node may be called and then this additional node may pass the information to the configuration server.

Preferably, the PSTN number may be received using calling line identification, CLID, within the initiated call. Other caller id services may be utilised.

Optionally, verifying the network gateway may include either: storing the received PSTN number, or providing an activation code to the network gateway during the initiated call. Such an activation code may be spoken (e.g. automatically) to a user to be entered into an application running on the mobile unit.

Optionally, the logic may be further configured to receive the results of a telephone line test from the network gateway.

According to an illustrative example, there is provided a system for routing telecommunications traffic comprising:
a network gateway having a data interface for connecting to a data network, a public circuit-switched telephone network, PSTN, interface and logic configured to communicate telecommunications traffic between a PSTN and a mobile unit using a data network. This allows telephone calls to and from a fixed line to be routed to a mobile device such as a cell phone or preferably as smart phone. Calls may then be connected from the PSTN via the network gateway and to the end user even when a user is not at the location of the telephone line or land line. In other words, this system emulates a long range wireless or DECT handset. The telecommunications traffic may be telephone calls or in some situations SMS messages. Signalling may go via the server and the media may either also go via that server or another server (SBC/media proxy) or may be routed directly to the user's mobile. The server may be a cloud server, for example. There may be a plurality of servers each connectable with one or more network gateways. The network gateways may be devices wired or plugged in to a telephone socket (or connected wirelessly, for example using Digital Enhanced Cordless Telecommunications - DECT) and then connected to the data network (e.g. the Internet, intranet or similar) either wirelessly or wired. For example, the network gateway may be connected by an Ethernet cable or WiFi to a modem (e.g. ADSL or cable) or combined modem/router. Alternatively, the network gateway may comprise or be part of a single device providing functionality of the modem or modem/router so that an external connection is not required. One, two or more mobile units may be associated with each telephone line and/or network gateway. Any one or more may connect with the telecommunications traffic. More than one telephone line may also connect or interface with the network gateway, for example. Calls may originate on from the PSTN line or from the mobile unit (incoming or outgoing calls).

Preferably, the system may further comprise a
a server connectable with the network gateway across the data network and configured to route the telecommunications traffic between the PSTN and the mobile unit. The server may be used all of the time or when the mobile unit is outside of a local network (e.g. not on the same Internet connection, WiFi, LAN, WAN, etc.) that the network gateway is on. The server may also be used for signalling and call set up even when the media (i.e. voice or audio) is sent directly over a local or other data network. A media (e.g. audio) proxy server may also be used.

Preferably, the system may further comprise one or more mobile units configured connect with the telecommunications traffic. The connection may be direct (i.e. via the local network) or using the server across a wider network. The mobile unit may be smart phone, for example. The mobile unit may have an application including functionality for connecting with the data network (e.g. over WiFi, 3G, 4G, LTE, WiMax, etc.) so that it may communicate with the server, receive calls from the network gateway or initiate calls to the network gateway via the appropriate interaction with the server. In this manner these calls may be passed through to the network gateway, typically at the user's home or place of work.

Optionally, the server may be connectable with the mobile unit over the data network and/or a mobile network. The data network (e.g. the Internet) may be available to the mobile unit (cell phone or smart phone, for example) over a mobile network.

Preferably, the data network may be one or more selected from: the Internet, a mobile network, and a local network but may be other networks.

According to a second illustrative example, there is provided a server configured to route telecommunications traffic across a data network between a network gateway in communication with a public circuit-switched telephone network, PSTN, and a mobile unit. The server may be a cloud server, for example. The server acts as a conduit or node on the data network between the network gateway (connected to a telephone line) and one or more mobile units. Signalling may be transmitted separately to the media (i.e. telecommunications traffic including calls). Signalling may be passed through the sever together with the telecommunications traffic or it may take another route (e.g. directly to the mobile unit or via other entity or server).

According to a third illustrative example, there is provided a method for routing telecommunications traffic comprising the steps of:
connecting a call between a network gateway in communication and a telephone line of a public circuit-switched telephone network, PSTN;
directing the call from the network gateway to a mobile unit over a data network.

Preferably, the method may further comprise the step of
passing the call through a server to the mobile unit. The server may be a cloud or virtual server or servers, for example.

According to a fourth illustrative example, there is provided a method for routing telecommunications traffic between a public circuit-switched telephone network, PSTN, and a mobile unit, the method comprising the steps of:
communicating telecommunications traffic between a server and a network gateway connected to a telephone line of a public circuit-switched telephone network, PSTN, over a data network; and
communicating the telecommunications traffic between the server and the mobile unit over the data network. This method may be carried out by a server or preferably a cloud or virtual server or servers.

Optionally, either or both methods may further comprise the steps of:
determining the identity of a caller calling the telephone line connected to the network gateway; and
connecting the call to a mobile unit out of a plurality of mobile units based on the identity of the caller. Therefore, particular callers may be associated to one or more mobile units or users of those mobile units. This may be configured in advance. These preferences may be stored at the network gateway or on the server, or elsewhere, for example.

Optionally, the method may further comprise the step of initiating a voicemail recording when a user of the mobile unit is unavailable. The user may set an option on their mobile unit (cell phone or smart phone, for example) that they are unavailable or to automatically go to voicemail after a set period.

Optionally, the method may further comprise the step of suppressing a ringing signal on the telephone line and/or initiating a ringing signal on the mobile unit. Therefore, the land line or PSTN line may or may not ring (depending on setting) on an incoming call.

Preferably, the network gateway may be connected to the data network over a protocol selected from the group consisting of: ADSL, cable, WLAN, LAN, WiMax, 3G, 4G and LTE. Other data network protocols may be used.

According to a fifth illustrative example, there is provided a network gateway comprising:
a data interface for connecting to a data network;
a public circuit-switched telephone network, PSTN, interface for connecting to a telephone line on the PSTN; and
logic configured to route telecommunications traffic between a PSTN and a mobile unit over the data network. This network gateway may be a bridge, node, interface, switch or router between a telephone line and the data network (e.g. the Internet). The network gateway therefore has the function of translating and routing telecommunications between the two. The network gateway may be able to interface with more than one telephone line or data network (e.g. a mobile data network, ADSL, cable, WiMax, etc.) simultaneously. A server may act between the network gateway and the mobile unit or the telecommunications traffic may pass directly between them.

Optionally, the logic may be further configured to:
receive a telephone call at the PSTN interface, and
route the call to the data network over the data interface.

Optionally, the logic may be further configured to test the telephone line connected to the PSTN interface. This maybe carried out as part of a setup, configuration or registering process.

Preferably, the test includes a voltage line measurement when the telephone line is idle and/or busy. This allows an optimal or improved local setup or profile to be determined.

Optionally, the test may be initiated by receiving a telephone call on the telephone line or by receiving a signal initiating a telephone call and the result of the test is reported over the telephone line in response. The results may be reported to a server or configuration server.

Optionally, the result or results of the test may be used to configure the network gateway.

Optionally, the logic may be further configured to set up an account with a configuration server over the data network. Alternatively, the logic may be carried out at the configuration server.

Optionally, the logic may be further configured to receive a signal to initiate a telephone call to the configuration server.

Optionally, the logic may be further configured to receive an activation code over the telephone line. The activation code may be used to validate or start the service. For example, the activation code may be announced or spoken (e.g. computer generated) or otherwise transmitted (digital, DTMF, modem, etc.) Use of the service or of the network gateway may depend on a valid activation code that may be authenticated locally or remotely, for example.

The activation code may be used to add additional mobile units (i.e. devices running the application) such that they may be automatically associated with the account, house, local and/or network gateway by virtue of the activation code. Preferably, the activation code may be unique.

The methods described above may be implemented as a computer program comprising program instructions to operate a computer. The computer program may be stored on a computer-readable medium.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
FIG. 1 shows a schematic diagram of a system for routing telecommunications traffic, given by way of example only;
FIG. 2 shows a use case diagram of a method for configuring a network gateway service;
FIG. 3 shows a use case diagram of a further method for configuring a network gateway service;
FIG. 4 shows a use case diagram of a further method for configuring a network gateway service;
FIG. 5 shows a use case diagram of a further method for configuring a network gateway service;
FIG. 6 shows a use case diagram of a method for receiving incoming calls;
FIG. 7 shows a use case diagram of a method for receiving incoming calls that divert to voicemail;
FIG. 8 shows a use case diagram of a method for blocking incoming calls;
FIG. 9 shows a use case diagram of a method for transferring calls to a mobile unit;
FIG. 10 shows a use case diagram of a method for dynamically handling calls; and
FIG. 11 shows a use case diagram of a method for handling calls with limited packet connection.

It should be noted that the figures are illustrated for simplicity and are not necessarily drawn to scale.

### Detailed description of the preferred embodiments

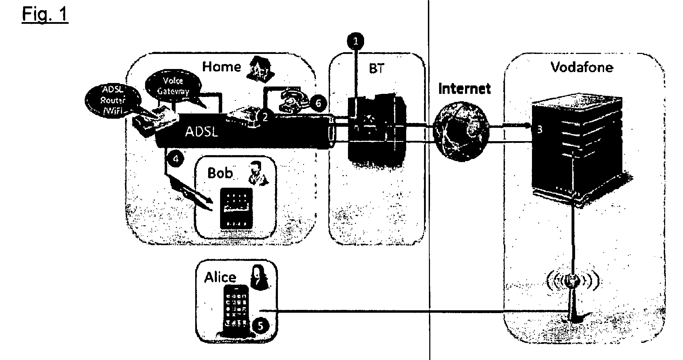

Figure 1 shows a schematic diagram of a system for routing telecommunications traffic. An incoming PSTN call arrives by an existing fixed telephone line provider 1 (e.g. voice and ADSL line). A voice gateway or network gateway converts the call to VoIP (SIP, RTP, etc) and interacts with a server (e.g. softswitch, virtual or cloud server) over a data network such as the Internet, for example 2. This may be using the ADSL connection, for example.

The server implements service logic to fork the call to multiple endpoints/applications 3. Media (e.g. calls) could go by the most direct or local path rather than via the server. If one of the endpoints is physically located within the home or the location of the existing ADSL connection, wireless connection, or other Internet connection, then this data connection is used to communicate with a the endpoint 4. The endpoint may be a mobile unit such as a portable computer, mobile handset, smart phone tablet, or other device.

If one of the endpoints is on a mobile data connection (e.g. 3G, LTE, etc.) then this is used to transport the VoIP call 5.

Depending on capability, the network or voice gateway can support fall back to the fixed or PSTN line 6. If the mobile unit only has limited packet service or is on 2G, for example, then a notification of an incoming call may be delivered and the user or consumer may choose a particular device to use (e.g. on plugged, physically or logically connected to the network gateway).

The network gateway may be similar to a bridge between a PSTN/Circuit Switched analogue telephone line and a digital Voice over IP system and preferably offers FXS and FXO functionality. The network gateway is connected to the server or softswitch either through the home ADSL and ISP internet connection or through a wireless data connection. There are several advantages with this approach:
- The user does not need to change their fixed/PSTN access provider
- The mobile operator can enable a converged service offering without needing a relationship with the fixed line supplier to the customer.
- The user can make and receive calls to/from their existing geographic PSTN number from any authorised VoIP endpoint.
- The customer can retain their geographic fixed line number and call package and add mobility and smart calling features (such as visual voice mail, call filtering etc) to this service to extract more value from the existing fixed line voice service
- Unified call handling policies across all fixed and mobile incoming calls
- Least cost routing for outbound calls where intelligent routing directs calls to either mobile network or fixed line termination points according to which commercial terms and existing usage offers the best terms
- Improved quality routing where calls are terminated on the fixed line connection from a high quality VoIP client to achieve fixed line voice quality from a mobile device
- Onward routing of incoming fixed line calls to legacy mobiles (without a VoIP Application) with billing system integration with received party pays regimes (subject to regulatory requirements).

The VoIP endpoint may be either a SmartPhone VoIP application (that can be made available to customers via a suitable mobile application store/market place), a web portal or an operator hosted service such as a Voicemail System. The operator may provide a mobile VoIP solution that itself supports a wide range of value add services in addition to its basic yet ubiquitously available circuit switched offering.

The system allows the user to register several VoIP endpoints with the VoIP infrastructure so that when a call is made to the users PSTN number multiple VoIP endpoints can ring, giving the user the ability to take the call on any of the ringing or notified devices.

Although some users may choose to remove their existing fixed phone, the network gateway may also provide the ability to plug this device in so that it can be used as normal. In this scenario, the network gateway can be configured to apply a delay before ringing the existing PSTN phone.

With the describe architecture, an operator can allow a user to access and configure services once so that they apply across both fixed and mobile scenarios, example of this include but are not limited to:
A unified Visual Voicemail offering;
A single unified Visual Voicemail Inbox (with transcription) clearly showing calls from their Mobile VoIP, Mobile CS and Fixed calls ;
User defined inbound call routing rules;
Including rules based on time of day of calling party;
The ability for a user to dynamically (at the time of the call) decide how the call should be handled;
E.g. Divert to Voicemail, Divert to other extension/device, permanently block, answer with one of a range of predefined audio messages, etc.

It should be noted circuit switched calls may not be supported over LTE bearers so mobile operators wishing to provide voice services over these bearers (devices) may need to embrace VoIP in some manner.

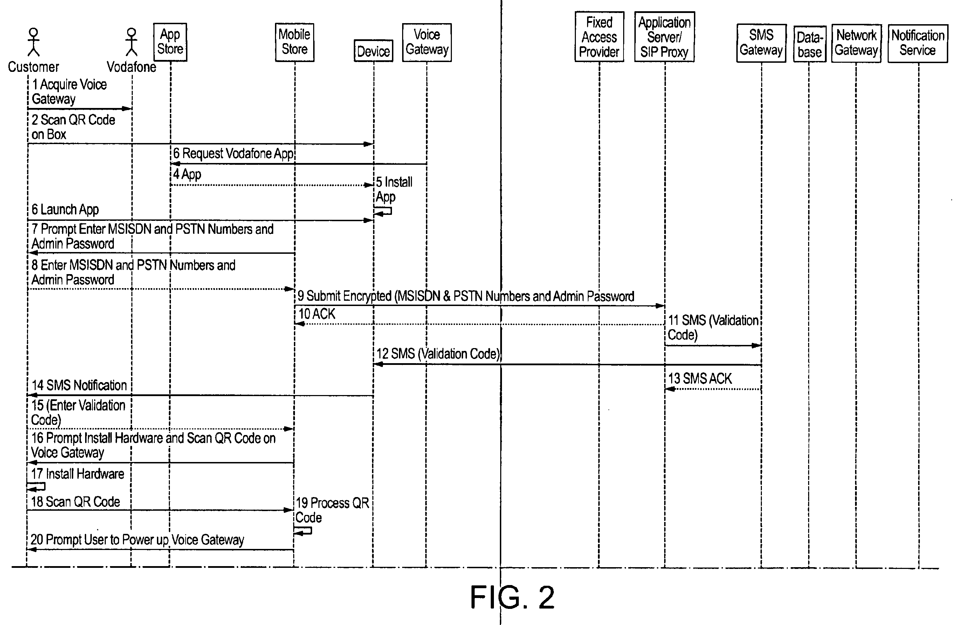

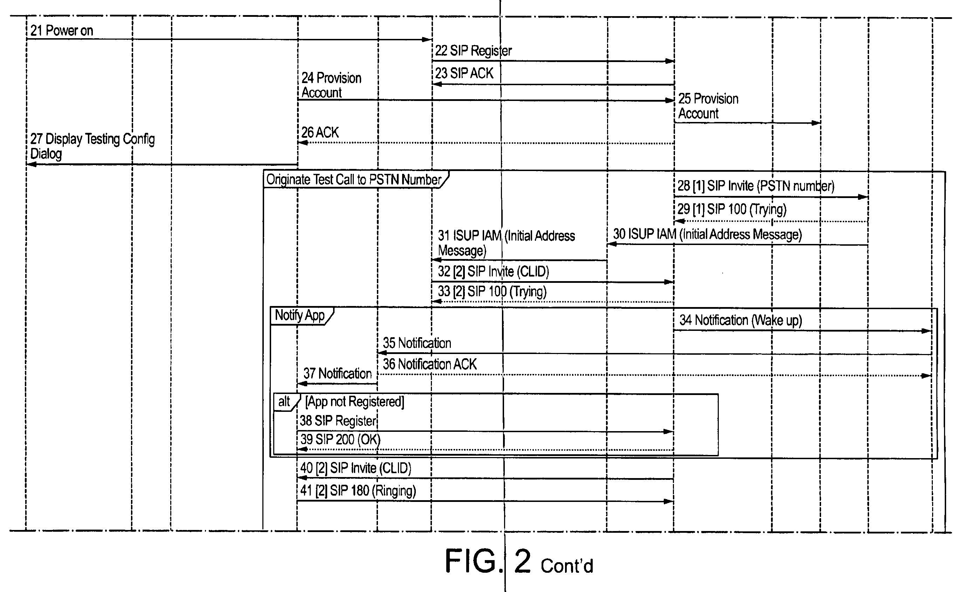

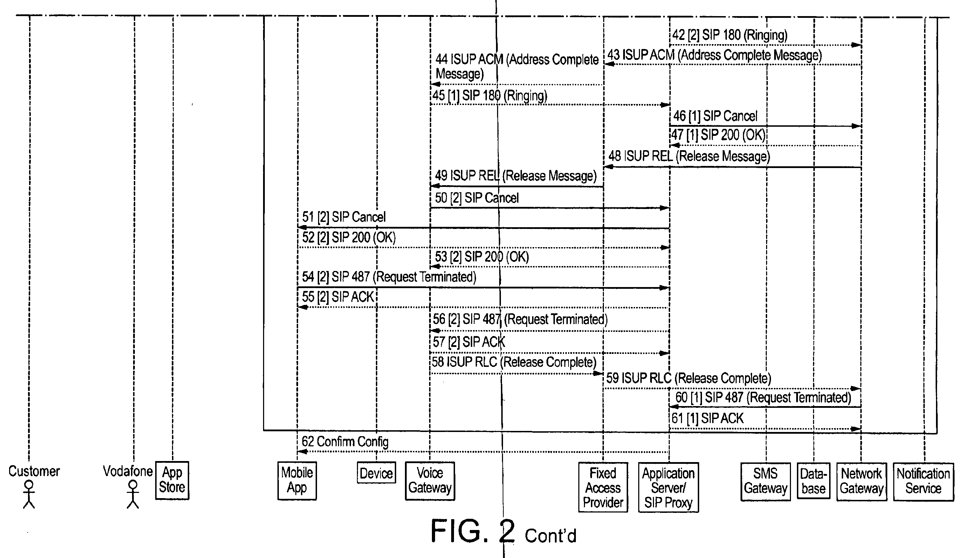

The sequence diagrams in the use cases of figures 2 to 11 are intended to outline the use case and to show conceptually how they could be realised, as such the message flows are indicative and steps and message may be omitted for simplicity sake.

It should be noted that in many cases there are multiple ways in which the use case can be realised.

In the following diagrams the terms SIP Proxy/Application Server are used but this should not imply a specific capability/architecture and the more generic Softswitch or server term could equally well have been used.

### Out of the box - Registration or configuration

The simplicity and "out of the box experience" is critical to the success of this concept. Therefore, the concept requires a minimal amount of configuration. In order to optimise the overall experience the user interactions are simplified with the use of QR codes (3D bar codes).

The network gateway may be acquired (e.g. from a shop or online).

An application may be downloaded an installed on the users mobile unit or device (e.g. iOS, Android).

The application is started and prompts for a QR (or other graphical representation) code to be acquired. This enables an identifier of the network gateway to be determined by the application.

A password for the service may be selected and entered into the application. Optionally, the PSTN number may be entered if this cannot be obtained automatically (i.e. using caller line identification (CLID)).

A configuration server may then dial the PSTN number. This may be used to verify the configuration.

The application will receive the call (via the network gateway and server or softswitch 3) and detect the PSTN number of the configuration server using CLID (without answering).

The user may associate further mobile units with the service by repeating the process on multiple devices.

This procedure is illustrated in the use case flow diagram of Fig. 2.

Additionally, SIP register step 22 of the flow diagram may include conducting PSTN line voltage measurements for line idle and line busy (by requesting a call back from the Application Gateway) and supplying these in the signalling messages to the Application Gateway. The server may use these measurements to customise the Voice Gateway configuration file to suit the local premises telephony system.

In Fig. 2 the QR codes are used as a means to:
(i) bootstrap the download of the Mobile Application.
(ii) configure and register the Voice Gateway with the VoIP infrastructure

It should also be noted that other mechanisms to bootstrap the configuration are available and can be employed if QR codes are not appropriate, these include but are not limited to:
(i) URLs printed on the box and Voice Gateway (including "tiny" URLs)
(ii) The use of printed SMS codes, a reply will include the link to the Mobile Application

As previously discussed the proposed system also allows the user to register multiple VoIP endpoints (Mobile Applications) so that households with several people each with a mobile device can be catered for. In addition a household may wish to register a common device such as a tablet or PC.

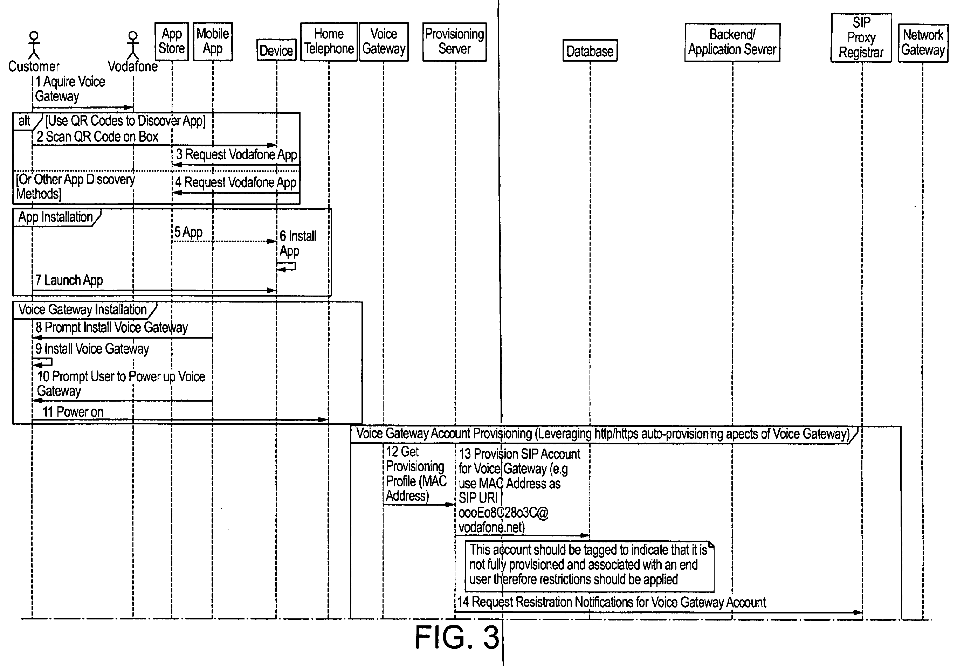

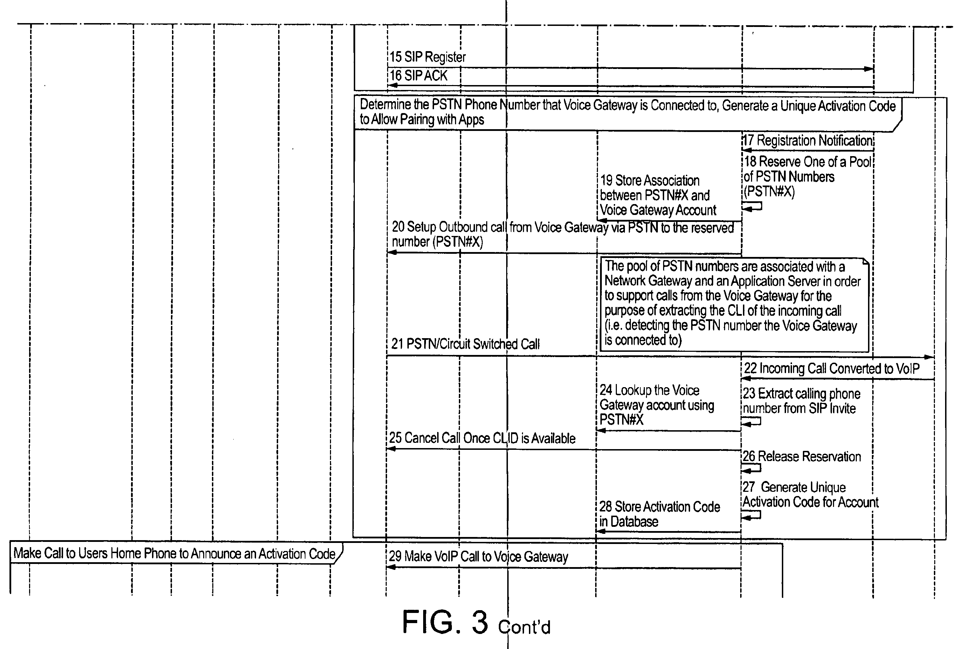

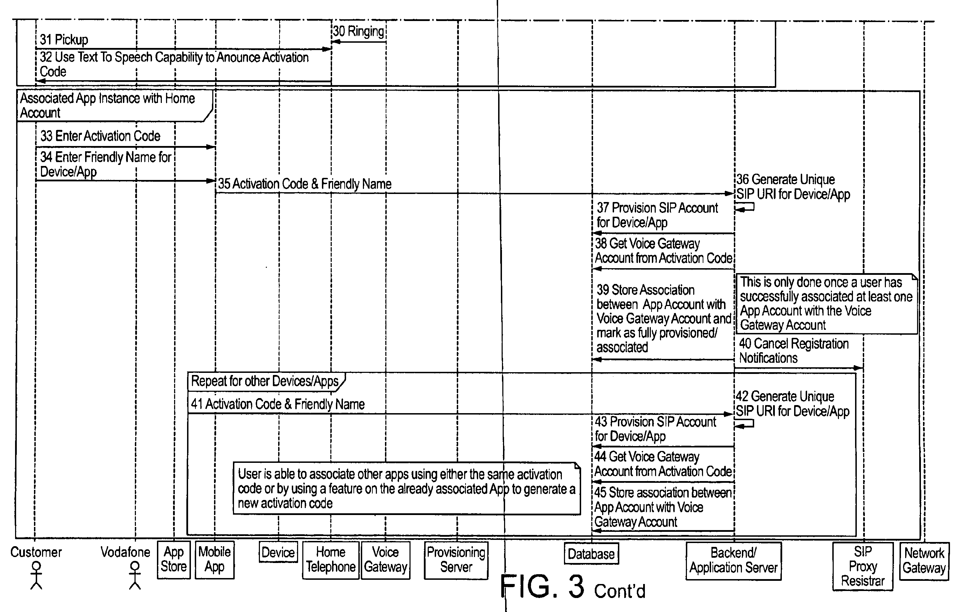

An additional step may occur during the process illustrated by Fig. 2. The network gateway may retrieve a provisioning profile from a provisioning or configuration server. (This step is illustrated in Fig. 3, however). This additional step (i.e. 21a) would occur between existing steps 21 (power on) and 22 (SIP Register).

This step is included in the alternative flow (step 12), which is actually our preferred approach. Given this I would suggest that the line voltage should be reported by the VoIP gateway in this request. The VoIP Gateway already has the potential to include its MAC ID in this request so this would be a logical extension to this existing mechanism

### Alternative Out of the Box Experience - Registration or configuration

As previously discussed the proposed system also allows the user to register multiple VoIP endpoints (Mobile Applications) so that households with several people each with a mobile device can be catered for. In addition a household may wish to register a common device such as a tablet or PC (the mobile unit may be a desktop computer, processor, personal device or other device, for example).

Fig. 3 shows an alternative configuration method. If the user has setup their PSTN line such that it does not present CLID then this mechanism may not work.

The user will either need to activate CLID or the solution could also provide a manual way to configure the system. The latter can be achieved with the use of a web portal via which the user can manually enter the MAC address of their Voice Gateway and their PSTN number. Once this is known, the backend can make a VoIP call directly to the network gateway and then announce an Activation Code. Here, the use of the VoIP call provides some protection against users attempting to register App instances against someone else's network gateway.

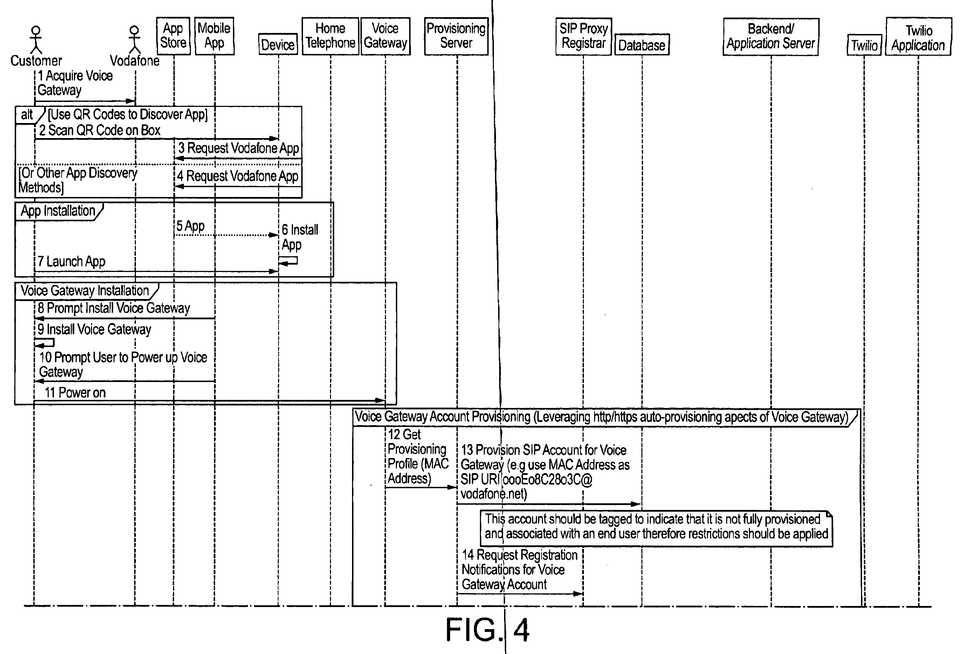

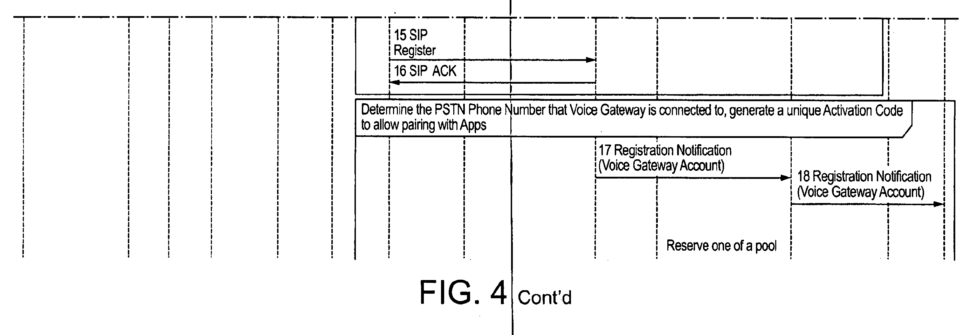

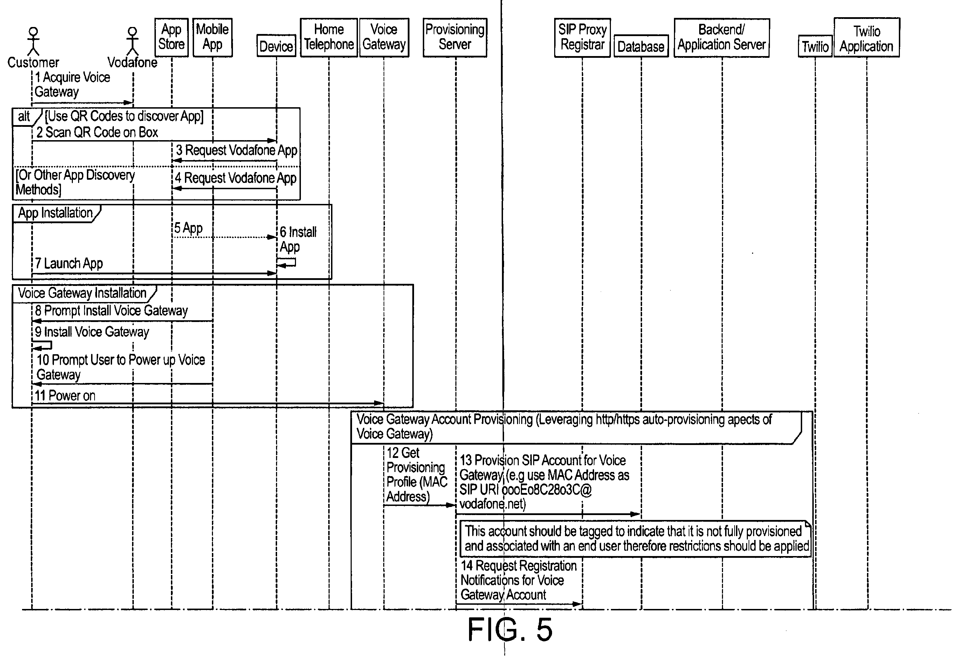

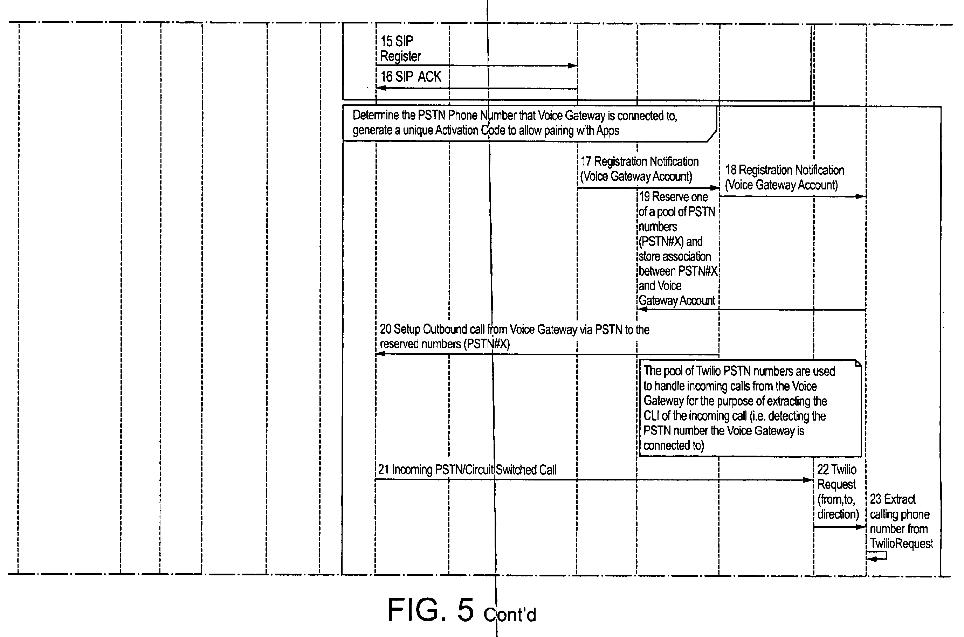

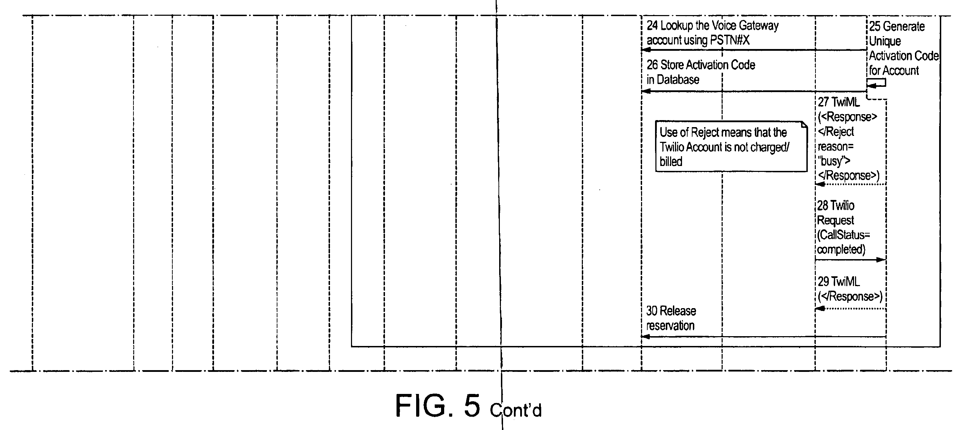

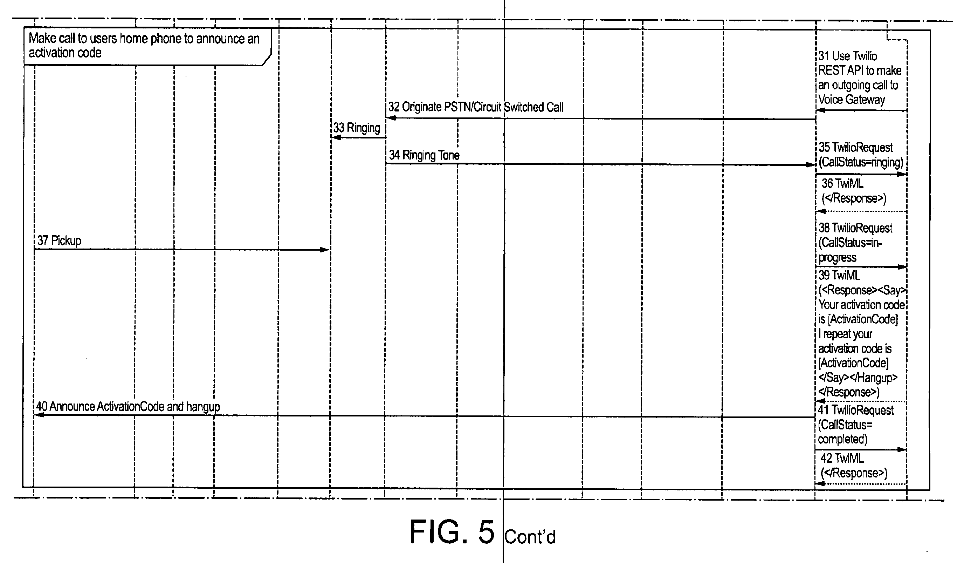

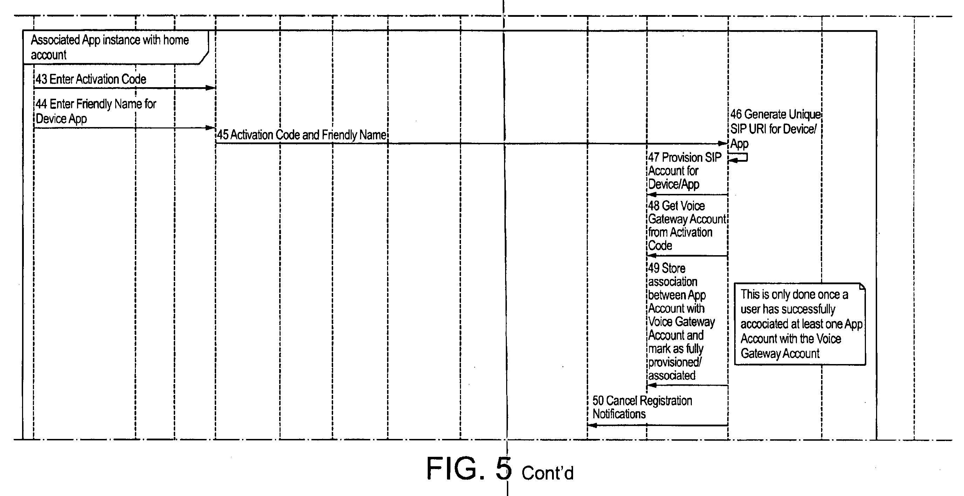

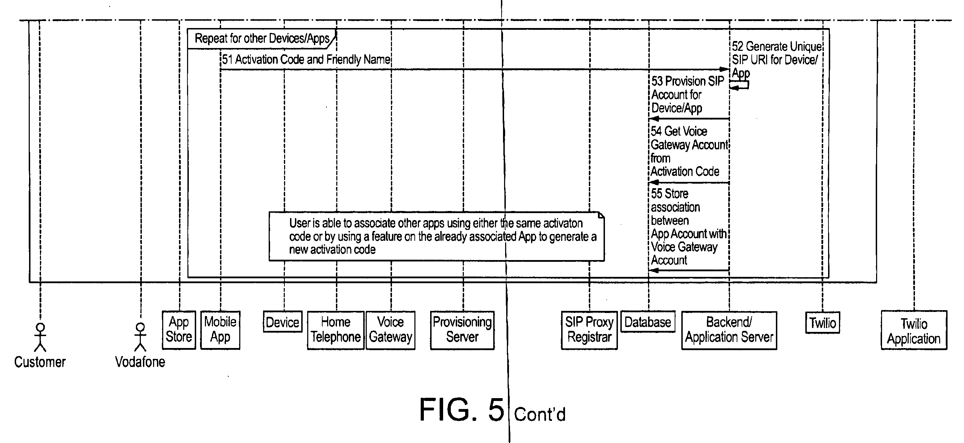

As shown in Fig. 3, step 3 Switch on voice gateway and step 11 of flow diagram may include conducting PSTN line voltage measurements for line idle and line busy (by requesting a call back from the Application Gateway) and supplying these in signalling messages to the Application Gateway. The configuration server (which may be part of or separate from the server or softswitch) may these measurements to customise the a configuration file to suit the local premises telephony system. Figs. 4 and 5 illustrate variations on the configuration or registration procedure.

The following steps may take place during a configuration or registration procedure:
1) Network Gateway retrieves a configuration - this allows it to register with the server;
2) The server instructs the Network Gateway to make a call to a specified PSTN Number;
3) Calls to the specified number are handled by a server that determines the PSTN number of the caller;
4) This information can be used to configure the system;
5) Once this is complete the system can then initiate a call to the PSTN number that the network gateway is connected to;
6) The user can then answer their fixed phone that may be either plugged into the gateway in series or be in parallel;
7) When the user answers they will hear a confirmation message and an activation code; and
8) The user can then enter this activation code into the mobile application.

This solves the following three problems:
a) The gateway does not know the PSTN number that it is connected to;
b) The Server does not know the PSTN number that the network gateway is connected to until it receives a call from a network gateway; and
c) There needs to be an easy way to associate a mobile application with a network gateway.

The Voice Gateway may be configured when a call is made to the user's fixed PSTN number. The Voice Gateway interacts with the VoIP infrastructure.

A party ringing a user's PSTN geographic telephone number.

The network gateway converts this call to VoIP and connects to the softswitch or server.

Server enforces any predetermined rules and notifies all VoIP endpoints (mobile units) of incoming call.

Mobile unit application alerts the user(s) of incoming call.

Network gateway allows fixed telephone to ring (or may suppress this).

User decides whether or not to answer the call on their mobile unit (smart phone, computer, etc.).

Network gate transcodes incoming PSTN call and forwards to appropriate VoIP endpoint (application on mobile unit where the user has answered the call).

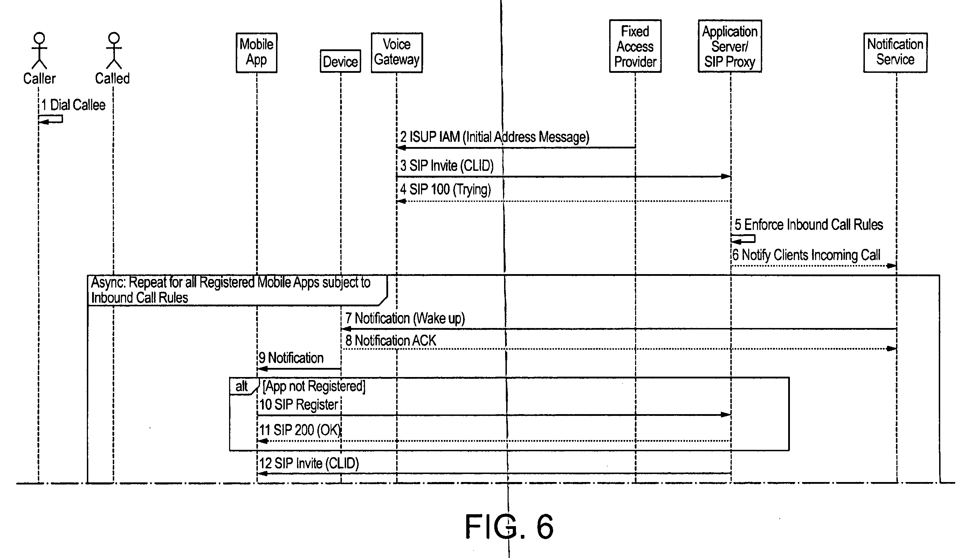

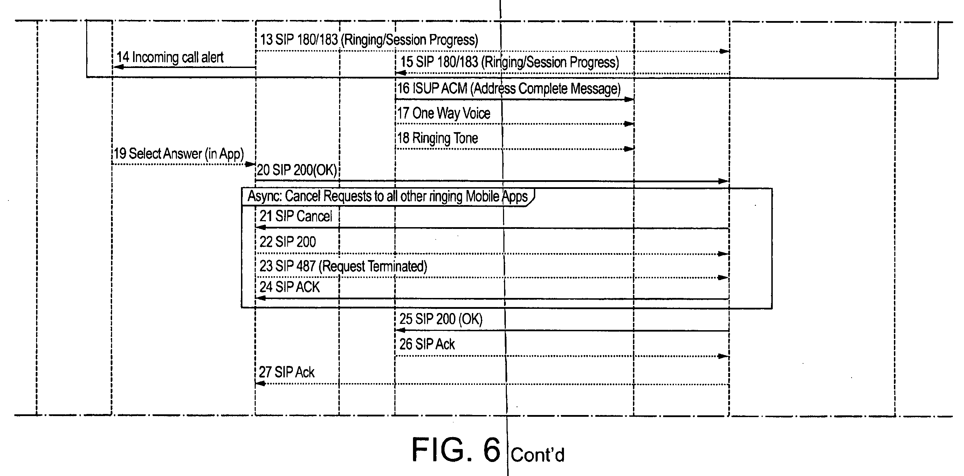

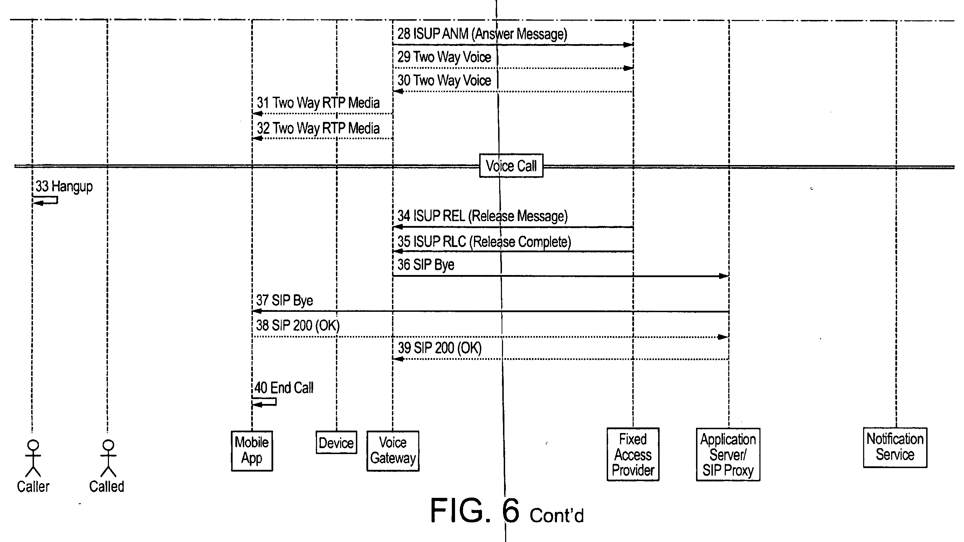

This is illustrated in further detail in Fig. 6.

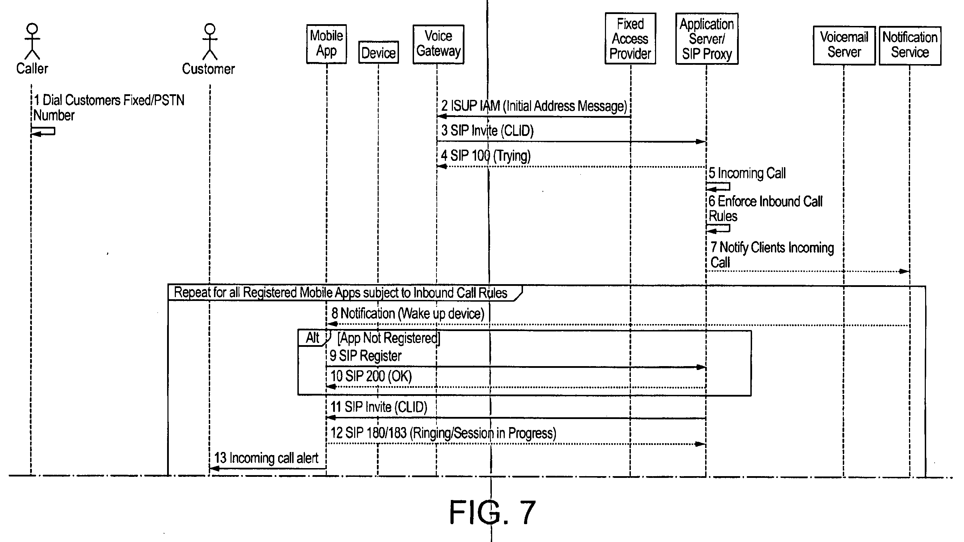

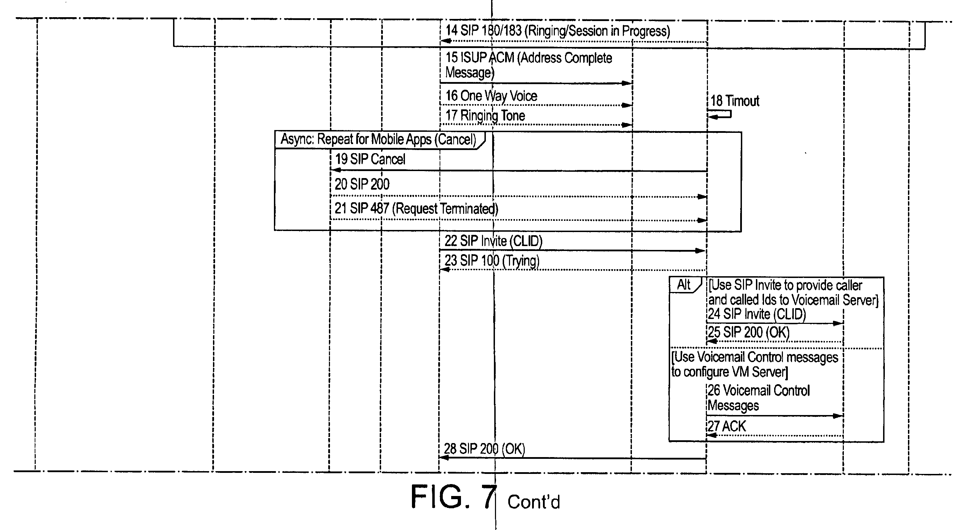

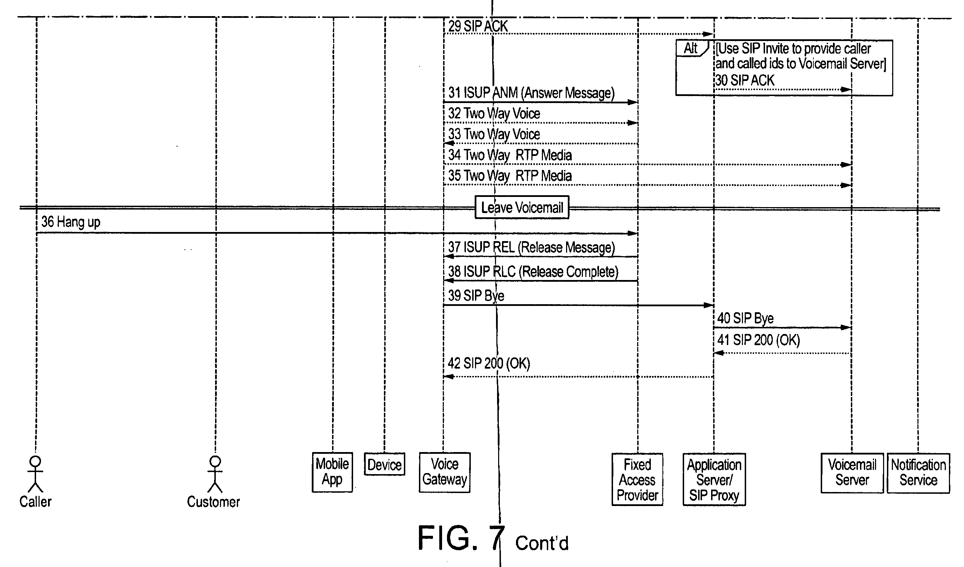

The system may also provide a converged rich Visual Voicemail system where a unified Visual Voicemail inbox can be supported for messages left for calls to Mobile VoIP and the Fixed/PSTN number. In households with multiple users the system must ensure that the messages for calls to the Fixed/PSTN number are available to all users but also that messages for calls to the individual Mobile VoIP endpoints are not accessible by other users. This is illustrated further in Fig. 7.

### Inbound Calling Rules

The system can also support user defined inbound calling rules. These rules can be configured via the mobile application or via some other online portal.

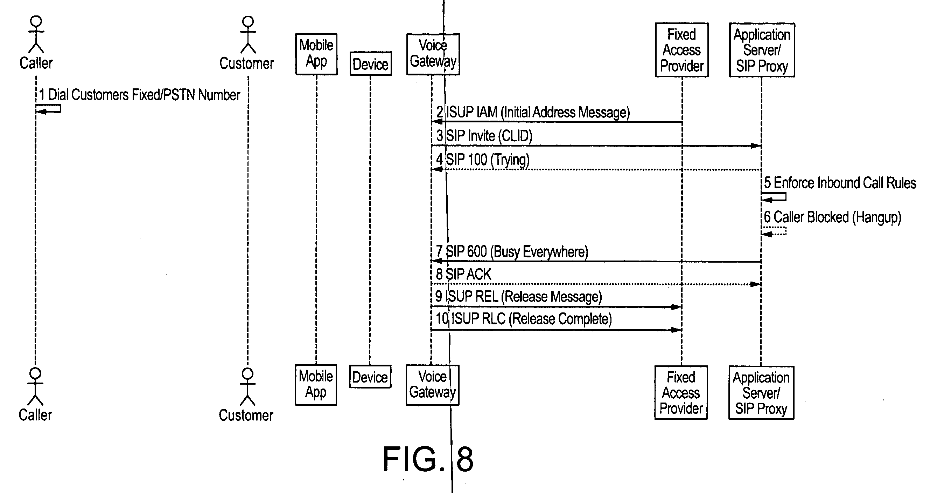

Fig. 8 illustrates the flow diagram for the case where the user has blocked a specific number.

### Call Transfer to other Mobile Application

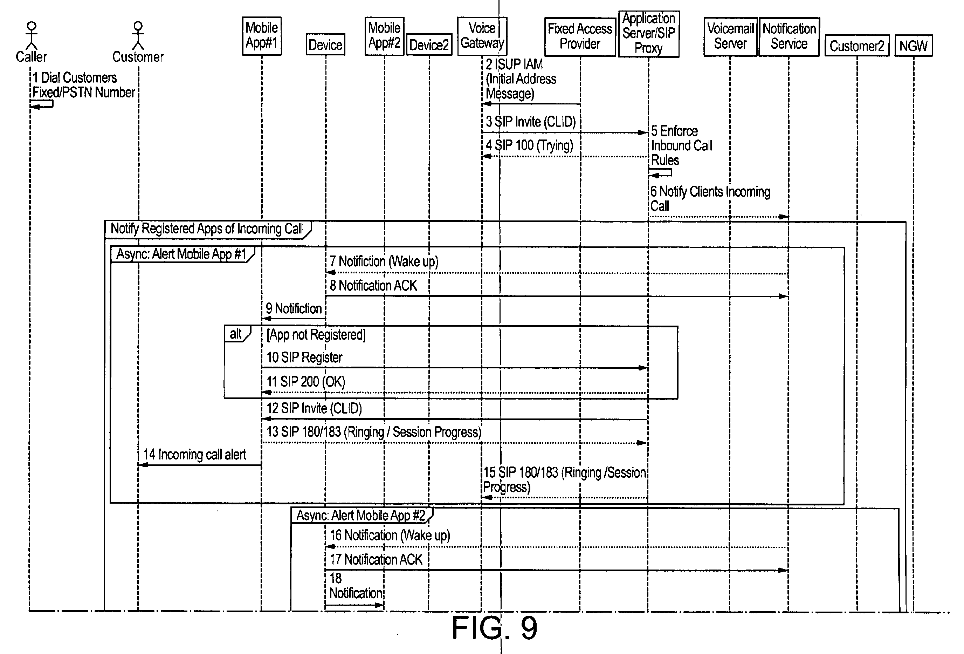

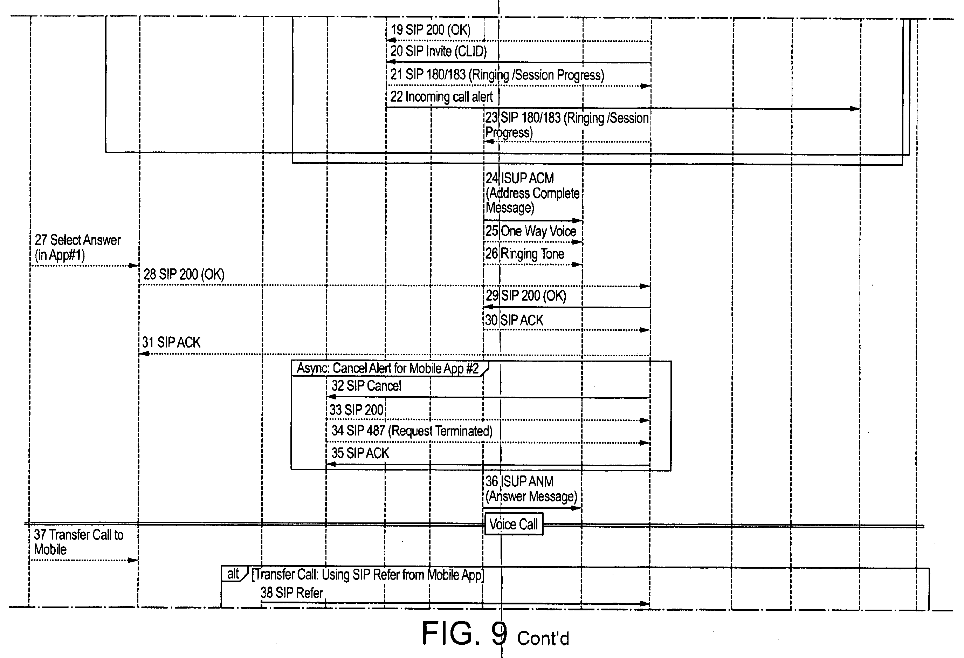

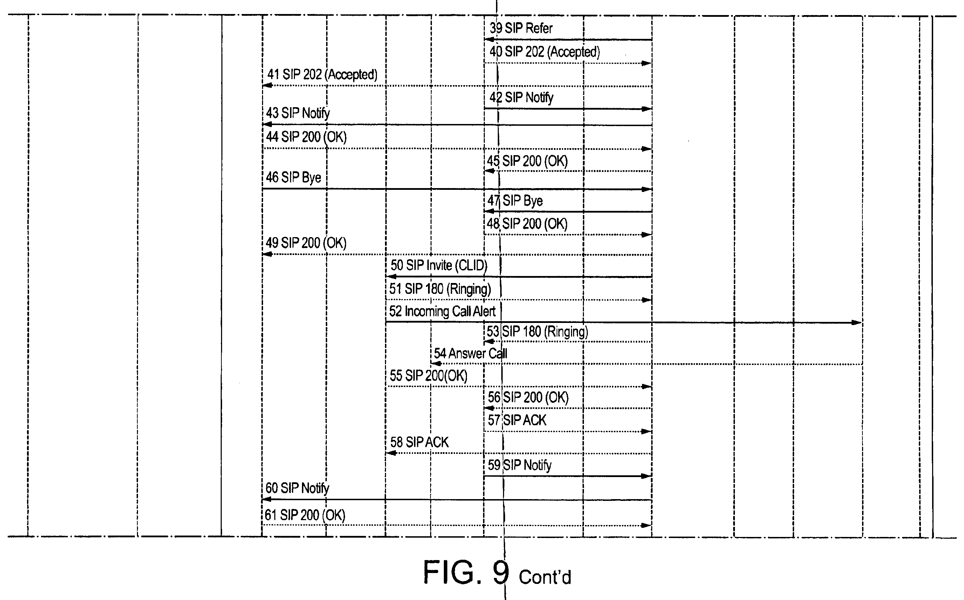

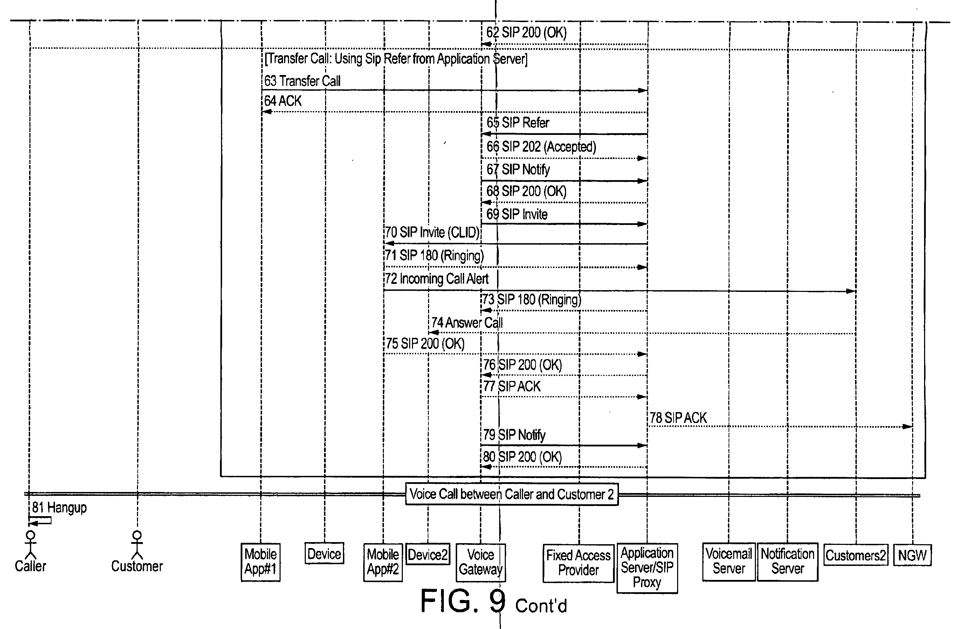

When the user has multiple registered VoIP endpoints (registered or configured mobile units) the system may support the ability for a user to initially answer an incoming call on one VoIP endpoint but then subsequently decide to transfer the call to another VoIP endpoint. In the flow diagram shown in Fig. 9 an "unattended call transfer" is shown, but "attended call transfers" can also be supported.

The system can also support the transferring of a call to a user's device that does not support the mobile application by originating a circuit switched call to the user's device in question. In this case the system needs to be able to apply the call costs to the relevant user account.

### Dynamic Call Handling

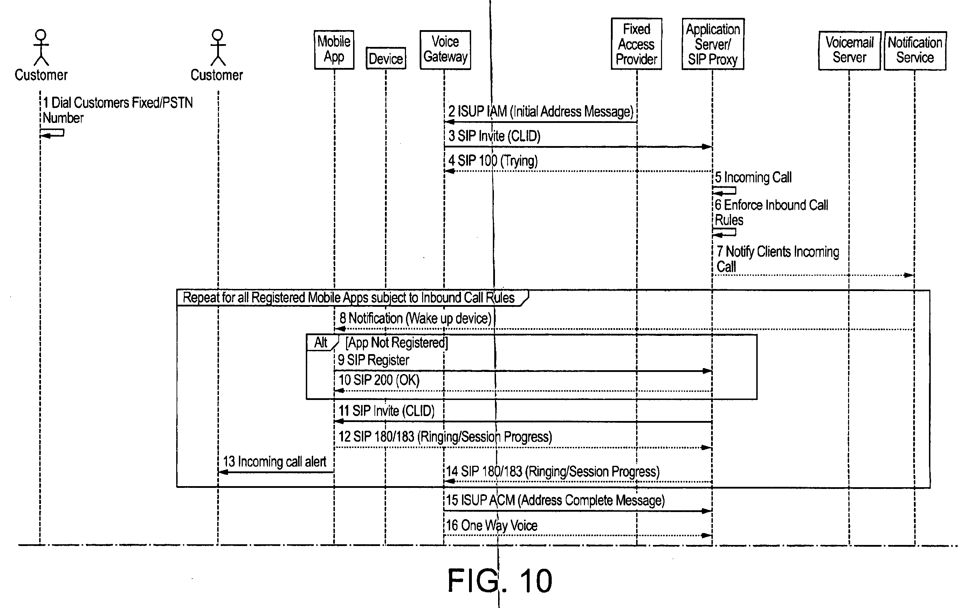

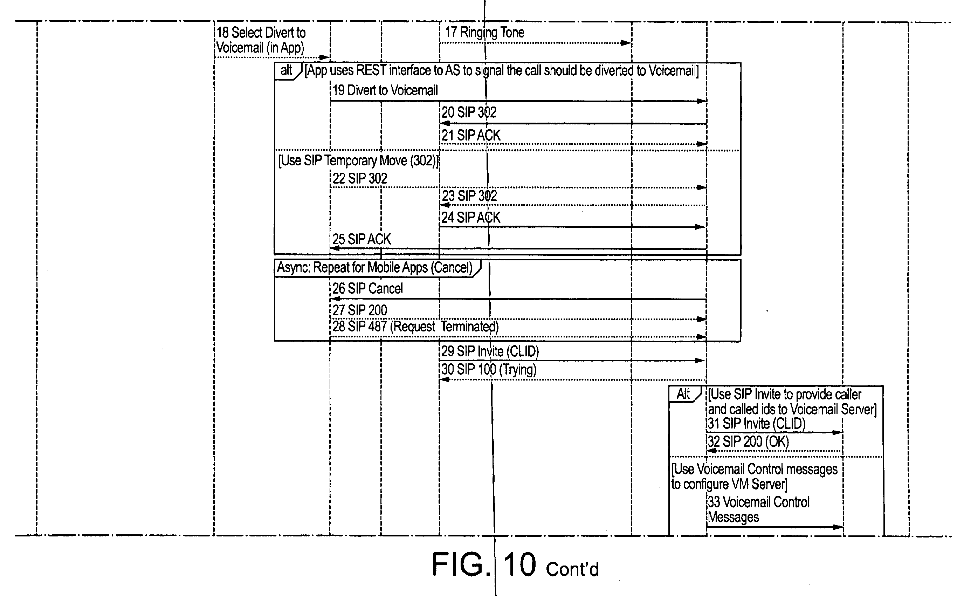

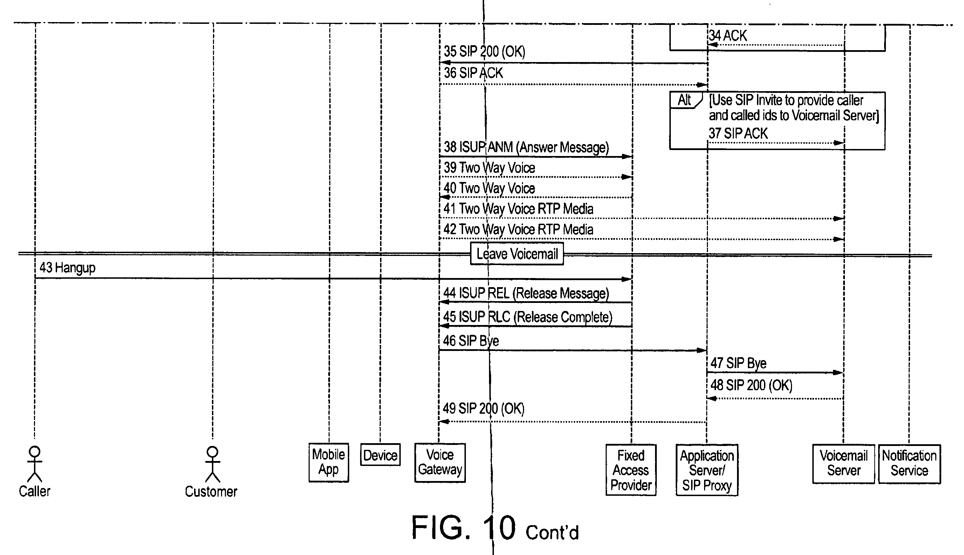

The system can also allow the user to choose (at the time of the call) how the call should be handled e.g. divert to Voicemail, block, respond with an announcement etc. This is illustrated further in Fig. 10

Call handling when no 3G/LTE/WiFi bearer is available

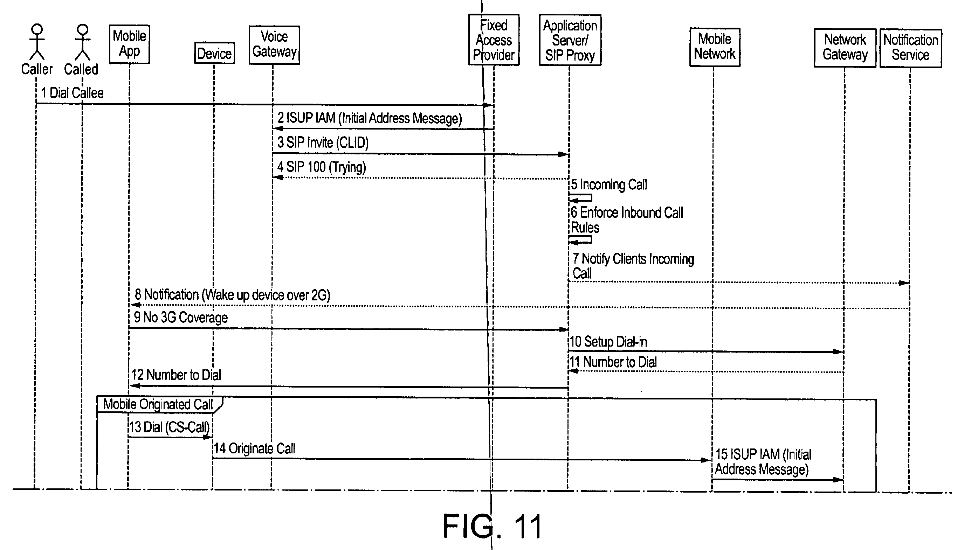

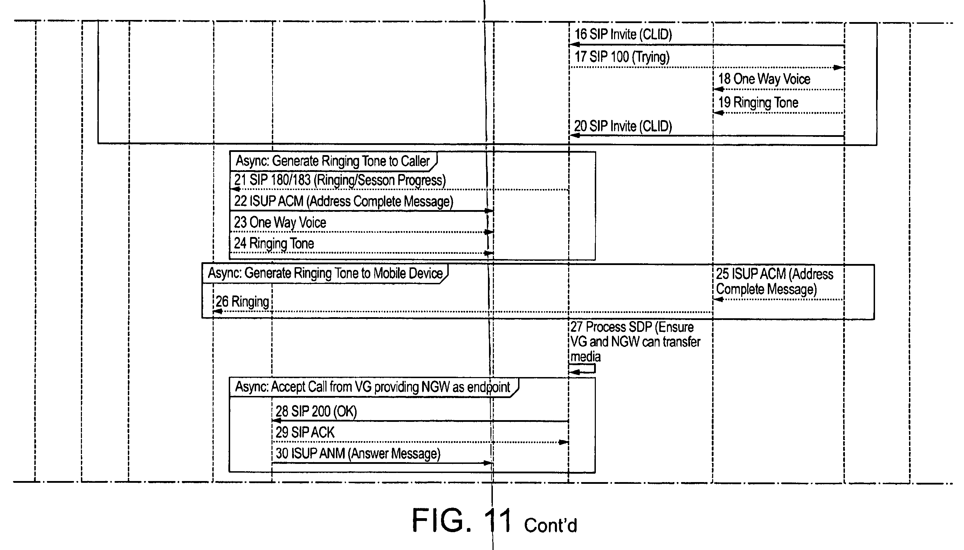

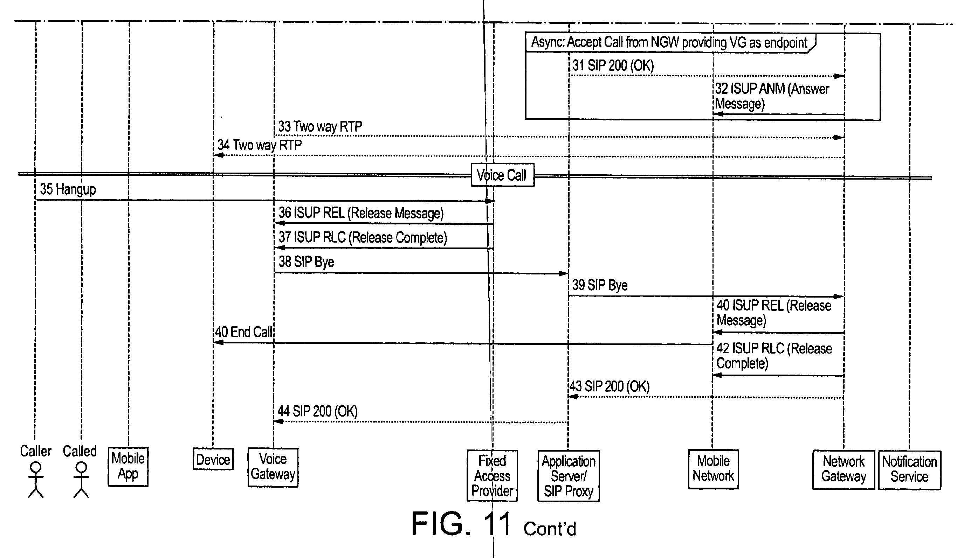

When the user is an area with no 3G/LTE/WiFi (or other packet bearer capable of supporting VoIP at a suitable Voice Quality) the system can notify the user via the Mobile Application that there is an incoming call. The Mobile Application can then give the user the option to place a normal Circuit Switched call (if supported) and the system can bridge the two incoming calls so that the user is still able to take incoming calls to their PSTN/Fixed number. This is illustrated further in Fig. 11.

### Enhanced Voicemail & CS Coverage Extension

The system may also provide an Enhanced Voicemail system that replaces a user's existing voicemail for both calls to their mobile and calls to their fixed number. The enhanced Voicemail system also ensures that the voicemail message from calls to the home number are shared with all the household members, yet voicemail messages from calls to an individual's mobile number are sandboxed/isolated from other household members. This enhanced Voicemail system could provide visual voicemail capabilities that could be exposed to end users via their VoIP App or via another standalone App.

Also in the case where the user is out of mobile coverage the Enhanced Voicemail system Voicemail system can provide the ability to try to bridge the incoming circuit switched call to a VoIP call that can be delivered over any IP bearer (including WiFi) to the user's registered VoIP App(s). There are several ways in which this capability could be implemented, and the following is one example:
(i) The user is out of 2G/3G coverage and an incoming call to the user's mobile diverted (on unreachable) to the users Voicemail box.
(ii) The Voicemail system determines that the user has enabled this feature on this Voicemail box.
(iii) The Voicemail system queries the backend/database to determine the specific App instance(s) that the user has nominated (the user can nominate one or more Apps instances and set a simultaneous ringing or sequential ringing with a priority order)
(iv) The Voicemail System leverages PSTN Gateways to convert the call to a VoIP call and then interworks with the Application/SIP Proxy to send an invite to the appropriate App instance
(v) If the user chooses to answer the call then the Voicemail System works with a PSTN Gateway to bridge the Circuit Switched leg from the caller with the VoIP leg to the App instance.
(vi) If the App instance is not registered or the user does not answer the Voicemail System can act as a normal Voicemail system and ask the caller to leave a message.

As will be appreciated by the skilled person, details of the above embodiment may be varied without departing from the scope of the present invention, as defined by the appended claims.

For example, the server acting between the network gateway and the mobile unit need not be used and instead telecommunications traffic may be routed directly to the mobile unit or other device running the application. This may be particularly useful when both the network gateway and the mobile unit (any or all) or other devices are on the same (e.g. local) data network.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A method of configuring a network gateway service connecting a telephone line on a public circuit-switched telephone network, PSTN, with a data network enabling telecommunications traffic to be routed from the PSTN over the data network to a mobile unit, the method comprising the steps of:
connecting a voice gateway device to the telephone line connected on the PSTN (1 in Figure 2);
providing an application on the mobile unit (5 in Figure 2);
obtaining by the application a PSTN number associated with the telephone line connected to the voice gateway device (7, 8 in Figure 2);
submitting by the application the PSTN number to a configuration server (9, 10 in Figure 2);
obtaining by the application a graphical representation of an identifier of the voice gateway device (16-20 in Figure 2);
registering by the application the identifier with the configuration server (22, 23 in Figure 2); and
receiving at the application a call to the PSTN number from the configuration server via the voice gateway device (28-37, 40, 41 in figure 2).

2. The method of claim 1, wherein the providing step is prompted by obtaining at the mobile device a further graphical representation.

3. The method of claims 1 or 2 further comprising the step of:
verifying success of the configuration following receipt of the call at the application.

4. The method according to any of claims 1 to 3 further comprising the step of registering a user account associated with the network gateway service with the configuration server.

5. The method according to any of claims 1 to 4 further comprising the step of testing the telephone line.

6. The method of claim 5, wherein the test includes a voltage line measurement when the telephone line is idle and/or busy.

7. The method of claim 5 or claim 6, wherein the result of the telephone line tests is used to configure the voice gateway device.

8. A computer program comprising program instructions that, when executed on a computer cause the computer to perform the method of any of claims 1 to 7.

9. A computer-readable medium carrying a computer program according to claim 8.

10. A configuration server (Application server/SIP proxy in Fig.2) comprising:
a public circuit-switched telephone network, PSTN, interface; and
logic configured to:
receive from a mobile application at a mobile unit a PSTN number associated with a telephone line on the PSTN connected to a voice gateway device (9 in Figure 2);
receive from the mobile application at the mobile device an identifier of the voice gateway device (22 in Fig. 2), and
initiate a call to the PSTN number between the configuration server and the mobile application via the voice gateway device (28-37 in Figure 2); and
verify the success of the call (41, 62 in Figure 2).

11. The configuration server of claim 10, wherein initiating the call further comprises sending a signal to the voice gateway device to call the configuration server over the PSTN.

12. The configuration server of claim 11, wherein the PSTN number is received using calling line identification, CLID, within the initiated call.

13. The configuration server according to any of claims 10 to 12, wherein verifying the success of the call includes either: storing the received PSTN number, or providing an activation code to the voice gateway device during the initiated call.

14. The configuration server according to any of claims 10 to 13, wherein the logic is further configured to receive the results of a telephone line test from the voice gateway device.

## Patentansprüche

1. Verfahren zum Konfigurieren eines Netzwerk-Gateway-Service, der eine Telefonleitung auf einem öffentlichen leitungsgeschalteten Telefonnetz (PSTN) mit einem Datennetz verbindet, das vom PSTN über das Datennetz zu einer mobilen Einheit zu routenden Telekommunikationsverkehr ermöglicht, wobei das Verfahren die folgenden Schritte beinhaltet:
Anschließen eines Voice-Gateway-Geräts an die an das PSTN angeschlossene Telefonleitung (1 in Fig. 2);
Bereitstellen einer Anwendung auf der mobilen Einheit (5 in Fig. 2);
Einholen, durch die Anwendung, einer PSTN-Nummer, die mit der an das Voice-Gateway-Gerät angeschlossenen Telefonleitung assoziiert ist (7, 8 in Fig. 2);
Submittieren, durch die Anwendung, der PSTN-Nummer einem Konfigurationsserver (9, 10 in Fig. 2);
Einholen, durch die Anwendung, einer grafischen Darstellung eines Identifikators des Voice-Gateway-Geräts (16-20 in Fig. 2);
Registrieren, durch die Anwendung, des Identifikators bei dem Konfigurationsserver (22, 23 in Fig. 2); und
Empfangen, an der Anwendung, eines Anrufs an die PSTN-Nummer von dem Konfigurationsserver über das Voice-Gateway-Gerät (28-37, 40, 41 in Fig. 2).

2. Verfahren nach Anspruch 1, wobei der Bereitstellungsschritt durch Einholen einer weiteren grafischen Darstellung am mobilen Gerät eingeleitet wird.

3. Verfahren nach Anspruch 1 oder 2, das ferner den folgenden Schritt beinhaltet:
Überprüfen des Erfolgs der Konfiguration nach dem Empfang des Anrufs an der Anwendung.

4. Verfahren nach einem der Ansprüche 1 bis 3, das ferner den Schritt des Registrierens eines mit dem Netzwerk-Gateway-Service assoziierten Benutzerkontos bei dem Konfigurationsserver beinhaltet.

5. Verfahren nach einem der Ansprüche 1 bis 4, das ferner den Schritt des Prüfens der Telefonleitung beinhaltet.

6. Verfahren nach Anspruch 5, wobei die Prüfung eine Spannungsleitungsmessung beinhaltet, wenn die Telefonleitung ruhig und/oder belegt ist.

7. Verfahren nach Anspruch 5 oder Anspruch 6, wobei das Ergebnis der Telefonleitungsprüfungen zum Konfigurieren des Voice-Gateway-Geräts benutzt wird.

8. Computerprogramm, das Programmbefehle beinhaltet, die bei Ausführung auf einem Computer bewirken, dass der Computer das Verfahren nach einem der Ansprüche 1 bis 7 ausführt.

9. Computerlesbares Medium, das ein Computerprogramm nach Anspruch 8 führt.

10. Konfigurationsserver (Anwendungsserver / SIP-Proxy in Fig. 2), der Folgendes umfasst:
eine PSTN-(öffentliches leitungsgeschaltetes Telefonnetz)-Schnittstelle; und
Logik, konfiguriert zum:
Empfangen, von einer mobilen Anwendung an einer mobilen Einheit, einer PSTN-Nummer, die mit einer Telefonleitung auf dem PSTN assoziiert ist, an das ein Voice-Gateway-Gerät (9 in Fig. 2) angeschlossen ist;
Empfangen, von der mobilen Anwendung an dem mobilen Gerät, eines Identifikators des Voice-Gateway-Geräts (22 in Fig. 2), und
Initiieren eines Anrufs an die PSTN-Nummer zwischen dem Konfigurationsserver und der mobilen Anwendung über das Voice-Gateway-Gerät (28-37 in Fig. 2); und
Überprüfen des Erfolgs des Anrufs (41, 62 in Fig. 2).

11. Konfigurationsserver nach Anspruch 10, wobei das Initiieren des Anrufs ferner das Senden eines Signals zu dem Voice-Gateway-Gerät zum Anrufen des Konfigurationsservers über das PSTN beinhaltet.

12. Konfigurationsserver nach Anspruch 11, wobei die PSTN-Nummer mittels Rufnummernanzeige (CLID) innerhalb des initiierten Anrufs empfangen wird.

13. Konfigurationsserver nach einem der Ansprüche 10 bis 12, wobei das Überprüfen des Erfolgs des Anrufs eines der Folgenden beinhaltet: Speichern der empfangenen PSTN-Nummer oder Bereitstellen eines Aktivierungscode dem Voice-Gateway-Gerät während des initiierten Anrufs.

14. Konfigurationsserver nach einem der Ansprüche 10 bis 13, wobei die Logik ferner zum Empfangen der Ergebnisse einer Telefonleitungsprüfung von dem Voice-Gateway-Gerät konfiguriert ist.

## Revendications

1. Procédé de configuration d'un service de passerelle de réseau connectant une ligne téléphonique sur un réseau téléphonique public commuté, PSTN, avec un réseau de données permettant à un trafic de télécommunications d'être acheminé à partir du PSTN à une unité mobile par l'intermédiaire du réseau de données, le procédé comprenant les étapes consistant à :
connecter un dispositif de passerelle vocale à la ligne téléphonique connectée sur le PSTN (1 sur la Figure 2) ;
fournir une application sur l'unité mobile (5 sur la Figure 2) ;
faire obtenir, par l'application, un numéro PSTN associé à la ligne téléphonique connectée au dispositif de passerelle vocale (7, 8 sur la Figure 2) ;
faire soumettre, par l'application, le numéro PSTN à un serveur de configuration (9, 10 sur la Figure 2) ;
faire obtenir, par l'application, une représentation graphique d'un identifiant du dispositif de passerelle vocale (16 à 20 sur la Figure 2) ;
faire enregistrer, par l'application, l'identifiant auprès du serveur de configuration (22, 23 sur la Figure 2) ; et
recevoir, au niveau de l'application, un appel au numéro PSTN en provenance du serveur de configuration via le dispositif de passerelle vocale (28 à 37, 40, 41 sur la Figure 2).

2. Procédé selon la revendication 1, l'étape de fourniture résultant de l'obtention, au niveau du dispositif mobile, d'une représentation graphique supplémentaire.

3. Procédé selon la revendication 1 ou 2 comprenant en outre l'étape consistant à :
vérifier le succès de la configuration à la suite de la réception de l'appel au niveau de l'application.

4. Procédé selon l'une quelconque des revendications 1 à 3 comprenant en outre l'étape consistant à enregistrer un compte utilisateur, associé au service de passerelle de réseau, auprès du serveur de configuration.

5. Procédé selon l'une quelconque des revendications 1 à 4, comprenant en outre l'étape consistant à tester la ligne téléphonique.

6. Procédé selon la revendication 5, le test incluant une mesure de tension de ligne lorsque la ligne téléphonique est au repos et / ou est occupée.

7. Procédé selon la revendication 5 ou la revendication 6, le résultat des tests de ligne téléphonique étant utilisé pour configurer le dispositif de passerelle vocale.

8. Programme informatique comprenant des instructions de programme qui, lorsqu'elles sont exécutées sur un ordinateur, amènent l'ordinateur à réaliser le procédé selon l'une quelconque des revendications 1 à 7.

9. Support lisible par un ordinateur portant un programme informatique selon la revendication 8.

10. Serveur de configuration (« Application Server / SIP Proxy » sur la Fig. 2) comprenant :
une interface de réseau téléphonique public commuté, PSTN ; et
une logique configurée de façon à :
recevoir à partir d'une application mobile, au niveau d'une unité mobile, un numéro PSTN associé à une ligne téléphonique sur le PSTN connecté à un dispositif de passerelle vocale (9 sur la Figure 2) ;
recevoir à partir de l'application mobile, au niveau du dispositif mobile, un identifiant du dispositif de passerelle vocale (22 sur la Fig. 2) ; et
lancer un appel vers le numéro PSTN entre le serveur de configuration et l'application mobile via le dispositif de passerelle vocale (28 à 37 sur la Figure 2) ; et
vérifier le succès de l'appel (41, 62 sur la Figure 2).

11. Serveur de configuration selon la revendication 10, le lancement de l'appel comprenant en outre l'envoi d'un signal au dispositif de passerelle vocale pour appeler le serveur de configuration par l'intermédiaire du PSTN.

12. Serveur de configuration selon la revendication 11, le numéro PSTN étant reçu grâce à l'utilisation de l'identification de la ligne appelante, CLID, au sein de l'appel lancé.

13. Serveur de configuration selon l'une quelconque des revendications 10 à 12, la vérification du succès de l'appel incluant soit le stockage du numéro PSTN reçu, soit la fourniture d'un code d'activation au dispositif de passerelle vocale pendant l'appel lancé.

14. Serveur de configuration selon l'une quelconque des revendications 10 à 13, la logique étant configurée en outre de façon à recevoir les résultats d'un test de ligne téléphonique en provenance du dispositif de passerelle vocale.
